(19) Europäisches Patentamt
European Patent Office
Office européen des brevets

(11) **EP 4 552 046 B1**

(12) **EUROPEAN PATENT SPECIFICATION**

(45) Date of publication and mention
of the grant of the patent:
**06.05.2026   Bulletin 2026/19**

(21) Application number: **23742363.7**

(22) Date of filing: **04.07.2023**

(51) International Patent Classification (IPC):
*G06N 10/40* *(2022.01)*

(52) Cooperative Patent Classification (CPC):
**G06N 10/40**

(86) International application number:
**PCT/GB2023/051752**

(87) International publication number:
**WO 2024/009077 (11.01.2024 Gazette 2024/02)**

(54) **CHARGED PARTICLE TRAP OPERATION**

BETRIEB EINER FALLE FÜR GELADENE TEILCHEN

EXPLOITATION D'UN PIÈGE À PARTICULES CHARGÉES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:   **04.07.2022   GB 202209813**

(43) Date of publication of application:
**14.05.2025   Bulletin 2025/20**

(73) Proprietor: **Oxford Ionics Limited**
**Begbroke, Oxfordshire OX5 1PF (GB)**

(72) Inventors:
• **SRINIVAS, Raghavendra**
  **Begbroke Oxfordshire OX5 1PF (GB)**
• **ALLCOCK, David**
  **Begbroke Oxfordshire OX5 1PF (GB)**
• **MALINOWSKI, Maciej**
  **Begbroke Oxfordshire OX5 1PF (GB)**
• **BALLANCE, Chris**
  **Begbroke Oxfordshire OX5 1PF (GB)**

(74) Representative: **Piotrowicz, Pawel Jan Andrzej et al**
**Venner Shipley LLP**
**406 Cambridge Science Park**
**Milton Road**
**Cambridge CB4 0WW (GB)**

(56) References cited:
• **SRINIVAS RAGHU: "Laser-free trapped-ion quantum logic with a radiofrequency magnetic field gradient", 1 January 2020 (2020-01-01), pages 1 - 266, XP093083565, Retrieved from the Internet <URL:https://www.nist.gov/system/files/documents/2022/04/14/RaghuSrinivas_2020.pdf> [retrieved on 20230919]**

**Description**

**Field**

The present invention relates to operating a charged particle trap.

**Background**

A quantum computing architecture requires the ability to control individual qubits. Typically, this is achieved using spatially-varying control fields whereby each qubit experiences a different, locally-adjustable coupling.

In trapped-ion architectures, two approaches are mainly used, namely focused laser beams and spatially-varying magnetic fields. Generating highly-controlled, localised laser or magnetic fields, at scale, is, however, challenging. Consequently, a common approach that is used to address single-qubit operations is to employ imperfectly localised fields and to manipulate ions, i.e., to move ions in and out of regions to which the fields are applied. In this so-called "shuttling-based" approach, a single-qubit operation consists of ion shuttling and applying laser or magnetic pulses.

These approaches can have one or more drawbacks. For example, ion shuttling is slow due to the need to filter control electrodes, and this causes a bottleneck for performing single-qubit operations. Furthermore, simply shuttling ions within a field generated by a single source does not allow for individual phase control. Thus, to operate efficiently on N qubits in parallel, O(N) individually adjustable laser or magnetic field sources are usually needed. Integrating these sources into an ion-trap system is challenging and resource-intensive.

R. T. Sutherland, R. Srinivas, and D. T. C. Allcock, "Individual addressing of trapped ion qubits with geometric phase gates", (14 June 2022) available from https://arxiv. org/pdf/2206. 06546. pdf describes a scheme for individual addressing of trapped ion qubits, selecting them via their motional frequency. In this scheme, one ion acts as a "target" qubit and another ion acts as "spectator" qubit. Both qubits are driven with a pair of bichromatic microwave fields and an rf B-field gradient, thereby resulting in a potential gradient which is trichromatic.

Srinivas Raghu: "Laser-free trapped-ion quantum logic with a radiofrequency magnetic field gradient", 1 January 2020 (2020-01-01), pages 1-266, https://www.nist.gov/system/files/documents/2022/04/14/ RaghuSrinivas_2020.pdf, is a PhD thesis. This document describes that coupling the internal (spin) states of trapped ions to their shared motion is essential for applications in metrology, quantum simulation, and quantum information processing. This documents states that spin-motion coupling requires a state-dependent force and is typically performed with laser-based interactions, but that laser-based interactions can be limited by photon scattering, which is described as the leading error in the highest fidelity two-qubit gates demonstrated thus far. This document states that laser-free methods, which are not limited by photon scattering, have been proposed and demonstrated using either static magnetic field gradients, or magnetic field gradients close to the qubit frequency at gigahertz frequencies. The topic of the thesis is development of a laser-free method of spin-motion coupling that uses a radiofrequency magnetic field gradient. It is described that this technique is extended to two-qubit entangling gates that are intrinsically insensitive to qubit frequency errors, achieving a symmetric Bell-state fidelity of 0.999(1), which is described to be competitive with the highest-fidelity laser-based gates. The insensitivity to qubit frequency errors is described to enable laser-free individual addressing the employment of which is described to create anti-symmetric Bell states with fidelity 0.998(1). The described techniques are demonstrated in relation to a surface-electrode trap with integrated microwave and rf circuitry.

**Summary**

According to a first aspect of the present invention there is provided a method of operating a charged particle trap which includes a set of trap electrodes. The method comprises trapping a first charged particle at a first position, the first charged particle providing a first qubit having a first transition frequency, and trapping a second charged particle at a second position, the second charged particle having a second transition frequency.

The method comprises applying a potential gradient to the first and second charged particles wherein the first and second charged particles experience first and second magnitudes of potential gradient, respectively, and the potential gradient oscillates at a given frequency and is substantially monochromatic. The method comprises, while applying the potential gradient, applying a first oscillating potential to a first electrode at a first frequency so as to apply a first oscillating electric field locally to the first charged particle, and applying a second oscillating potential to a second electrode at a second frequency so as to apply a second oscillating electric field locally to the second charged particle.

The first and second transition frequencies may be different. The first and second frequencies (of the oscillating potentials) may be different.

The potential gradient may be applied for a longer period than the first and second oscillating potentials, or *vice versa.*

The first oscillating electric field may have a first phase value and the second oscillating electric field may have a second, different phase value. The phase of the quantum gate (i.e., rotation axis on the Bloch sphere) can be adjusted by changing the phase of the oscillating electric field relative to the phase of the potential gradient.

Applying the potential gradient may comprise applying at least one magnetic field gradient and/or laser field(s) to the first and second charged particles.

The method may further comprise applying a carrier drive to the first and second charged particles.

Applying the potential gradient to the first and second charged particles may comprise driving an oscillating current through an elongate conductive element for generating the at least one magnetic field.

The elongate conductive element may include first and second sections, wherein the first and second sections of the elongate conductive element are non-collinear. The elongate conductive element may comprise driving a first oscillating current through a first elongate conductive element, and driving a second oscillating current through a second elongate conductive element spaced apart from the first elongate conductive element.

The charged particle trap may include a substrate having a principal surface.

At least a first set of the set of trap electrodes, or all of the trap electrodes, may be disposed on the principal surface of the substrate or other surface. A second set of the set of trap electrodes may be supported on a different surface and are non-coplanar with the first set. The charged particle trap may include at least one elongate conductive element, which may be disposed on the principal surface of the substrate or other surface, for generating the at least one magnetic field.

The least one elongate conductive element may be disposed on the principal surface of the substrate. The least one elongate conductive element may be disposed on another surface of the substrate. The least one elongate conductive element may be disposed on a different substrate.

The set of trap electrodes may include first and second arrays of trap electrodes and the at least one elongate conductive element may be interposed between the first and second arrays of trap electrodes.

The first array of trap electrodes may comprise first trap electrodes spaced apart along a first direction, the second array of trap electrodes may comprise second trap electrodes spaced apart along the first direction, and the first and second arrays of trap electrodes are preferably spaced apart in a second direction orthogonal to the first direction.

The at least one one elongate conductive element may be supported on a different surface and may be non-coplanar with the first set of trap electrodes.

Applying the potential gradient to the first and second charged particles may comprise illuminating the first and second charged particles with at least one laser beam.

The first charged particle may have a given mode of oscillation having a given direction of oscillation and the method may comprise applying the potential gradient such that the potential gradient at the first charged particle has a component which is not perpendicular to the given direction of oscillation and the potential gradient at the second charged particle has a component which is not perpendicular to the given direction of oscillation, applying the first oscillating electric field such that that first oscillating electric field is not perpendicular to the given direction of oscillation, and applying the second oscillating electric field such that that second oscillating electric field is not perpendicular to the given direction of oscillation.

The set of trap electrodes may include the first and second electrodes. In other words, trap electrode may be used to provide the local oscillating electric fields.

The method may comprise trapping a third charged particle at a third position, the third charged particle providing a third qubit having a third transition frequency and applying the potential gradient to the third charged particle, wherein the third charged particle experiences a third magnitude of potential gradient. The method may comprise, while applying the potential gradient, applying a third oscillating potential to a third electrode at a third frequency so as to apply a third oscillating electric field to the third charged particle.

The method may comprise trapping N charged particles, each charged particle trapped at a respective position, each charged particle providing a respective qubit having a respective transition frequency. The method may comprise applying the potential gradient to the N charged particles, wherein the charged particle experiences a respective magnitude of potential gradient. The method may comprise, while applying the potential gradient, applying respective oscillating potentials to respective electrodes at respective frequencies so as to apply a respective oscillating electric field to a respective charged particle.

There may be between 10 and 1000 charged particles.

A charged particle may be an ion, such as calcium ion, atom or molecule with a net electric charge, an electron or a positron. The charged particles may include different charged particles, e.g., different ions.

According to a second aspect of the present invention there is provided a system comprising a charged particle trap which includes a set of trap electrodes and a control system for controlling the charged particle trap. The control system is configured to trap a first charged particle at a first position, the first charged particle providing a first qubit having a first transition frequency, to trap a second charged particle at a second position, the second charged particle having a second transition frequency, to apply potential gradient to the first and second charged particles, wherein the first and second charged particles experience first and second magnitudes of potential gradient, respectively, and wherein the potential gradient oscillates at a given frequency. The control system is configured, while applying the potential gradient, to apply a first oscillating potential to a first electrode at a first frequency so as to apply a first oscillating electric field locally to the first charged particle, and to apply a second oscillating potential to a second electrode at a second frequency so as to apply a second oscillating electric field locally to the second charged particle.

**Brief Description of the Drawings**

Certain embodiments of the present invention will now be described, by way of example, with reference to the accompanying drawings, in which:

Figure 1 is a schematic view of ions trapped in an ion trap each providing a respective qubit;
Figure 2 is a schematic block diagram of a system for independently controlling qubits shown in Figure 1;
Figure 3 is a process flow diagram of a method of operating a multi-qubit trapped-ion gate including a set of trap electrodes.
Figure 4 is a schematic perspective view of a first trapped-ion gate;
Figure 5 is a schematic plan view of the first trapped-ion gate shown in Figure 4;
Figure 6 is a schematic circuit arrangement for combining DC and AC signals;
Figure 7 is a schematic perspective view of a second trapped-ion gate; and
Figure 8 is a schematic plan view of the second trapped-ion gate shown in Figure 7.

**Detailed Description of Certain Embodiments**

<u>Introduction</u>

In the following, methods of performing parallel, single-qubit control, which do not require the use of individually adjustable laser or magnetic field sources, are described. The methods do not require localised laser or magnetic fields, or for ions to be moved in and out of localised regions for processing (i.e., regions to which a localised laser or magnetic field is applied), thereby ameliorating speed bottleneck issues associated with ion shuttling. Instead, a global potential gradient (*e.g.*, generated using one or more currents flowing through one or more elongate conductors, such as a wire or track) can be used in combination with localised oscillating electric fields, preferably low-frequency (*e.g.*, 0.1 to 20 MHz). Such electric fields may be easier to localise and to apply compared to laser or magnetic fields. Furthermore, local control can employ existing trap structures (*e.g.*, surface-electrode ion trap electrodes) rather than provide additional dedicated laser or magnetic field sources. The methods are parallelisable, and local control can be achieved by adjusting amplitude and phase of a local electric field. In other words, single-qubit rotation phase can be controlled via a locally adjustable electric field phase.

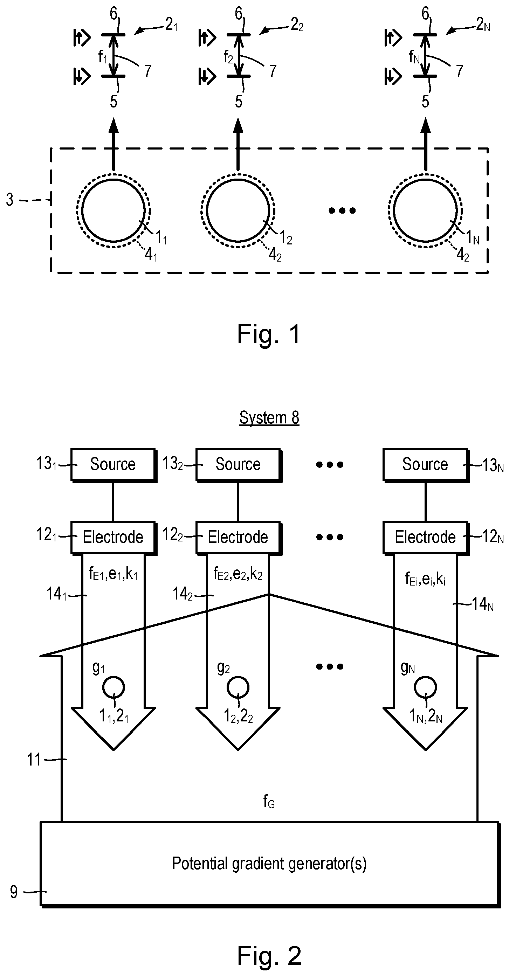

Referring to Figure 1, a plurality of charged particles $1_1, 1_2, ..., 1_N$ are shown.

In this case, the charged particles $1_1, 1_2, ..., 1_N$ are ions. A charged particle may, however, take the form of an atom or molecule with a net electric charge, an electron or positron. There may be three or more charged particles $1_1, 1_2, ..., 1_N$. For example, there may be between 10 and 1000 charged particles $1_1, 1_2, ..., 1_N$, i.e., $10 \leq N \leq 1000$. There may be more than 1000 charged particles.

Each ion $1_1, 1_2, ..., 1_N$ provides a respective qubit $2_1, 2_2, ..., 2_N$ and is spatially confined in an ion trap 3 at respective positions $4_1, 4_2, ..., 4_N$. Each qubit $2_1, 2_2, ..., 2_N$ has two states 5, 6, and a transition 7 between the two states 5, 6. Each qubit $2_1, 2_2, ..., 2_N$ has a respective transition frequency $f_1, f_2, ..., f_N$.

Referring also to Figure 2, individual qubits $2_1, 2_2, ..., 2_N$ can be independently controlled using a system 8.

The system 8 includes potential gradient generator(s) 9 for generating a potential gradient 11. The potential gradient generator(s) 9 may take the form of one or more magnetic field gradient sources and/or laser field sources which generates (generate) an oscillating magnetic field gradient or a laser field 11 having a frequency of oscillation $f_G$ which can be applied globally to the ions $1_1, 1_2, ..., 1_N$. One or more generators 9 may be used to generate the potential gradient 11, although the number of generators 9 is less than the number of ions $1_1, 1_2, ..., 1_N$.

Each ion $1_1, 1_2, ..., 1_N$ experiences a potential gradient 11 of respective magnitude $g_1, g_2, ...g_N$. The potential gradient may be in any direction.

The ions $1_1, 1_2, ..., 1_N$ experience a monochromatic (or "single tone") potential gradient 11. Thus, if a single potential gradient generator 9 is used, then it is arranged to generate a monochromatic potential gradient 11 and so the ions $1_1, 1_2, ..., 1_N$ see a monochromatic potential gradient 11. If, however, more than one potential gradient generator 9 is used, the potential gradient generators 9 are arranged to produce a net potential gradient 11 which is monochromatic as seen by the ions $1_1, 1_2, ..., 1_N$.

A monochromatic gradient can have one or more benefits, such as making implementation easier and helping to lower resulting operation errors. For example, delivering a single frequency allows for simple single-point impedance matching.

The system 8 also includes a plurality of electrodes $12_1$, $12_2$, ..., $12_N$ and signal sources $13_1$, $13_2$, ..., $13_N$ which generate oscillating electric fields $14_1$, $14_2$, ..., $14_N$, which are applied locally to respective ions $1_1$, $1_2$, ..., $1_N$. The electrodes $12_1$, $12_2$, ..., $12_N$ may be the same as at least some of the electrodes used to trap the ions $1_1$, $1_2$, ..., $1_N$.

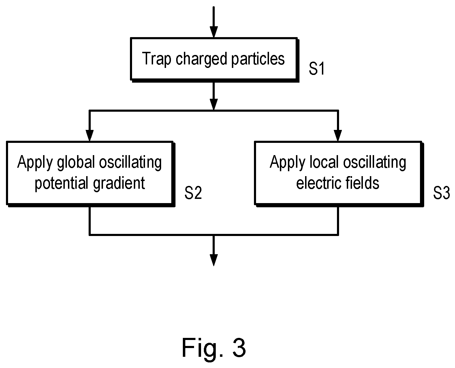

Referring also to Figure 3, in a method of single-qubit operation, the trapped-ion qubits $2_1$, $2_2$, ..., $2_N$ are confined in the ion trap 3 (step S1).

The potential gradient generator(s) 9 is (are) switched on, for a period of time $t_i$ (step S2). Each ion $1_1$, $1_2$, ..., $1_N$ experiences a respective potential gradient having a magnitude $g_1$, $g_2$, ..., $g_N$. The magnitude of the potential gradient 11 oscillates at the frequency $f_G$. The potential gradient 11 is monochromatic.

At the same time, the signal sources $13_1$, $13_2$, ..., $13_N$ apply oscillating signals to the electrodes $12_1$, $12_2$, ..., $12_N$ (step S3). Each ion $1_1$, $1_2$, ..., $1_N$ experiences a respective electric field $14_1$, $14_2$, ..., $14_N$ having a respective frequency, $f_{Ei}$, amplitude $e_i$ and phase $k_i$ (where i = 1, 2, ..., N). These parameters are adjustable locally. Adjusting phase $k_i$ locally enables parallel operations to be performed.

The potential gradient 11 and the electric field $14_1$, $14_2$, ..., $14_N$ are applied simultaneously for a period of time $t_i$. At the end of this time period, one or more of the qubits $2_1$, $2_2$, ..., $2_N$ may have undergone an addressed operation.

Examples of systems which employ a globally-applied potential gradient and locally-applied electric fields will now be described.

System using current-generated magnetic field gradient

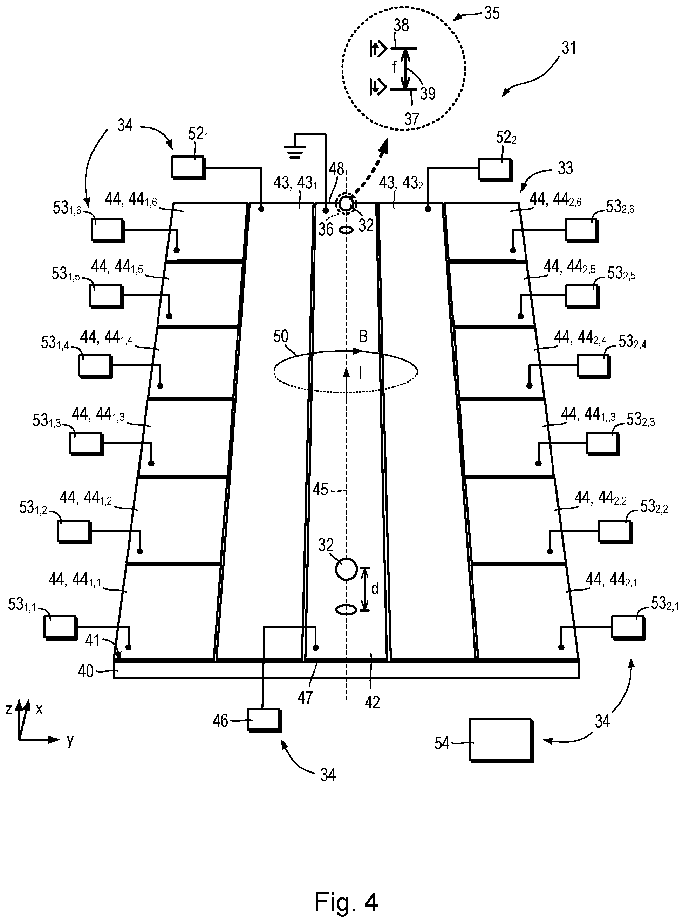

Rereferring to Figure 4, a first system 31 for quantum information processing using trapped charged particles 32 is shown.

The system 31 includes a charged particle trap 33 that may be housed in a vacuum chamber (not shown), which provides an ultrahigh vacuum environment allowing individual charged particles to be isolated, and a control system 34 for the trap 33.

In this case, charged particles 32 take the form of ions, such as calcium ions ($^{40}Ca^+$). For brevity, charged particles are also herein referred to as "ions". The charged particles may, however, take the form of atoms or molecules with net electric charge, or elementary charged particles, such as electrons or positrons.

As hereinbefore described, each ion 32 provides a respective qubit 35 and can be spatially confined in the trap 33 at respective positions 36. Each qubit has two states 37, 38 and a transition 39 between the two states 37, 38. Each qubit 35 has a respective transition frequency $f_i$ which can be measured, for example, using Rabi or Ramsey spectroscopy.

The trap 33 takes the form of surface-electrode trap, and comprises a substrate 40 having an upper surface 41 which supports a plurality of electrodes 42, 43, 44.

The electrodes 42, 43, 44 include central electrode 42 takes the form of a strip running along a longitudinal axis 45, and first and second electrodes $43_1$, $43_2$ take the form of respective strips running either side along the central electrode 42 such that the central electrode 42 is interposed between the first and second electrodes $43_1$, $43_2$. AC signals at RF frequencies are applied to the first and second electrodes $43_1$, $43_2$ (herein also referred to as "first and second RF electrodes") for producing ponderomotive confining potentials.

The electrodes 42, 43, 44 includes a set of trap electrodes $44_{1,1}$, $44_{1,2}$, $44_{1,3}$, $44_{1,4}$, $44_{1,5}$, $44_{1,6}$, $44_{2,1}$, $44_{2,2}$, $44_{2,3}$, $44_{2,4}$, $44_{2,5}$, $44_{2,6}$ arranged in two linear arrays (or "columns" or "rows") outside the first and second RF electrodes $43_1$, $43_2$.

Examples of surface-electrode traps can be found in WO 2021/205145 A1.

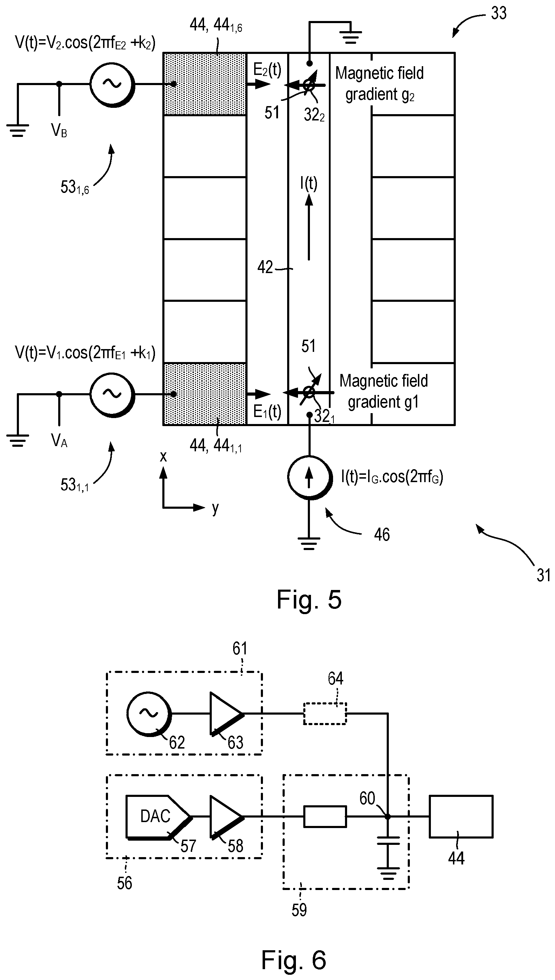

The control system 34 includes a current source 46 for driving an oscillating current I(t) through the central electrode 42 between first and second ends 47, 48. The second end 48 of the central electrode 52 is grounded. As will be explained in more detail, the current source 46 and central electrode 42 is used to generate a magnetic field 50 which oscillates at a frequency $f_G$. The ions experience respective magnitudes of magnetic field gradient 51 (Figure 5).

The control system 34 includes first and second voltages sources $52_1$, $52_2$ for applying signals to the first and second RF electrodes $43_1$, $43_2$, respectively, and voltage sources $53_{1,1}$, $53_{1,2}$, $53_{1,3}$, $53_{1,4}$, $53_{1,5}$, $53_{1,6}$, $53_{2,1}$, $53_{2,2}$, $53_{2,3}$, $53_{2,4}$, $53_{2,5}$, $53_{2,6}$ for applying respective signals to the trap electrodes $44_{1,1}$, $44_{1,2}$, $44_{1,3}$, $44_{1,4}$, $44_{1,5}$, $44_{1,6}$, $44_{2,1}$, $44_{2,2}$, $44_{2,3}$, $44_{2,4}$, $44_{2,5}$, $44_{2,66}$. The sources 50, $52_1$, $52_2$, $53_{1,1}$, $53_{1,2}$, $53_{1,3}$, $53_{1,4}$, $53_{1,5}$, $53_{1,6}$, $53_{2,1}$, $53_{2,2}$, $53_{2,3}$, $53_{2,4}$, $53_{2,5}$, $53_{2,6}$ are controlled by a computer system 54.

Referring also to Figure 5, operation of the system 31 is described in more detail.

Two trapped ions $32_1$, $32_2$ can be addressed in parallel in the surface-electrode trap 33.

Both ions $32_1$, $32_2$ are coupled to one potential gradient source, *i.e.,* central electrode 42. The potential gradient 51 is generated by passing an oscillating current I(t) through the central electrode 45. Local control is achieved by injecting oscillating voltages onto first and second electrodes $44_{1,1}$, $44_{1,6}$, respectively. The ions $32_1$, $32_2$ are spaced sufficiently far away from each other such the coupling from the first electrode $44_{1,1}$ to the second ion $32_2$, and from the second electrode $44_{1,6}$ to the first ion $32_1$, are very small.

A trapping electrode 44 may be used not only to apply a DC electric field used in trapping, but also an oscillating electric field. For example, a first source $53_{1,1}$ may add a first DC offset voltage $V_A$ and a first oscillating voltage $V(t) = V_1.\cos(2\pi f_{E1}+k_1)$ and apply a first combined voltage to the first electrode $44_{1,1}$ and a second source $53_{1,6}$ may add a second DC offset voltage $V_B$ and a second oscillating voltage $V(t) = V_2.\cos(2\pi f_{E2}+k_2)$ apply a first combined voltage to the second electrode $44_{1,6}$.

Referring to Figure 6, a suitable signal generator arrangement 55 is shown.

A DC voltage source 56 may include a digital-to-analogue converter 57 and an amplifier 58. The voltage source 56 is coupled to the electrode 44 via a low-pass RC filter 59 via node 60 between resistor R and capacitor C. An AC voltage source 61 may include an AC source 62 and an amplifier 63, and an optional series filter 64 coupled to the output of the source 61. The output of the source 61 or, if used, filter 64 is connected to the node 60 and, thus, to the electrode.

## System using laser-generated electric field gradient

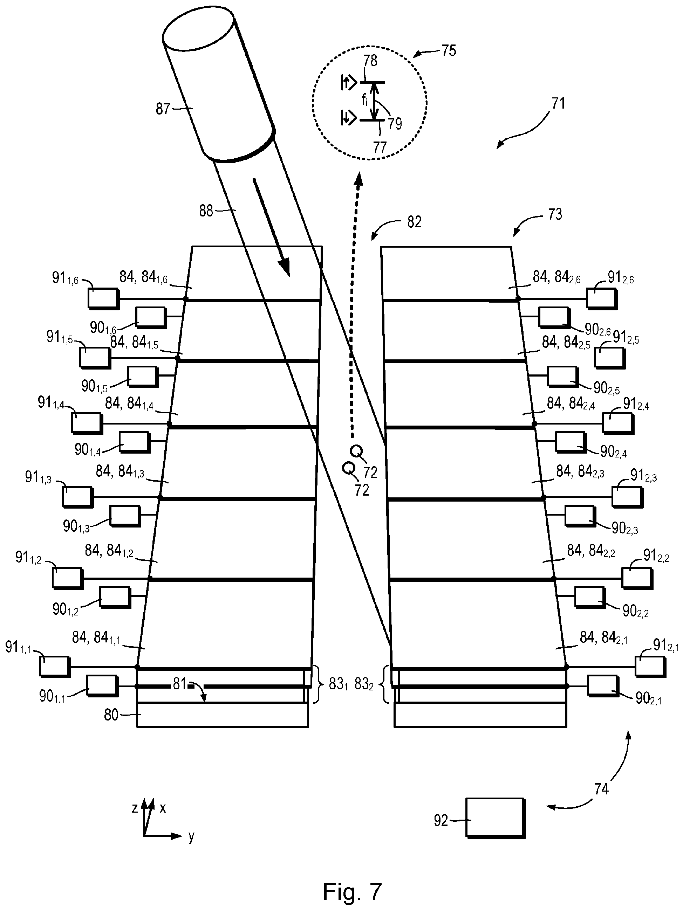

Rereferring to Figure 7, a second system 71 for quantum information processing using trapped charged particles 72 is shown.

The system 71 includes a charged particle trap 73 that may be housed in vacuum chamber (not shown), which provides an ultrahigh vacuum environment allowing individual charged particles to be isolated, and a control system 74 for the trap 73.

In this case, charged particles 72 take the form of ions, such as calcium ions ($^{40}Ca^+$). For brevity, charged particles are also herein referred to as "ions". The charged particles may, however, take the form of atoms or molecules with net electric charge, or elementary charged particles, such as electrons or positrons.

As hereinbefore described, each ion 72 provides a respective qubit 75 and can be spatially confined in the trap 73 at respective positions 76. Each qubit has two states 77, 78 and a transition 79 between the two states 77, 78. Each qubit 75 has a respective transition frequency $f_i$.

The trap 73 takes the form of microfabricated surface-electrode trap, and comprises a substrate 80 having an upper surface 81. The trap 73 comprises an elongate slot 82 through the substrate 80. Either side of the slot 82, the upper surface of the substrate 80 supports an electrode layer stack $83_1$, $83_2$.

Each electrode stack layer $83_1$, $83_2$ includes a set of lower electrodes $84_1$, $84_2$, $84_{1,1}$, $84_{2,1}$ (most lower electrodes are not visible in Figure 6 or 7), a dielectric layer $85_1$, $85_2$, and a set of upper electrodes $86_1$, $86_2$, $86_{1,1}$, $86_{1,2}$, $86_{1,3}$, $86_{1,4}$, $86_{1,5}$, $86_{2,1}$, $86_{2,2}$, $86_{2,3}$, $86_{2,4}$, $86_{2,5}$. Each dielectric layer $85_1$, $85_2$ is interposed between the lower and upper electrodes $84_1$, $84_2$, $86_1$, $86_2$.

The control system 74 includes a laser 87 which is used to generate a beam 88 which produces an electric field gradient 89.

The control system 74 includes a first set of voltage sources 90, 90, $90_{1,1}$, $90_{1,2}$, $90_{1,3}$, $90_{1,4}$, $90_{1,5}$, $90_{2,1}$, $90_{2,2}$, $90_{2,3}$, $90_{2,4}$, $90_{2,5}$ for applying respective signals to the lower electrodes 84, $84_{1,1}$, $84_{1,2}$, $84_{1,3}$, $84_{1,4}$, $84_{1,5}$, $84_{2,1}$, $84_{2,2}$, $84_{2,3}$, $84_{2,4}$, $84_{2,5}$, and a second set of voltage sources 91, $91_{1,1}$, $91_{1,2}$, $91_{1,3}$, $91_{1,4}$, $91_{1,5}$, $91_{2,1}$, $91_{2,2}$, $91_{2,3}$, $91_{2,4}$, $91_{2,5}$ for applying respective signals to the upper electrodes 86, $86_{1,1}$, $86_{1,2}$, $86_{1,3}$, $86_{1,4}$, $86_{1,5}$, $86_{2,1}$, $86_{2,2}$, $86_{2,3}$, $86_{2,4}$, $86_{2,5}$.

The sources 87, 90, 91 are controlled by a computer system 92.

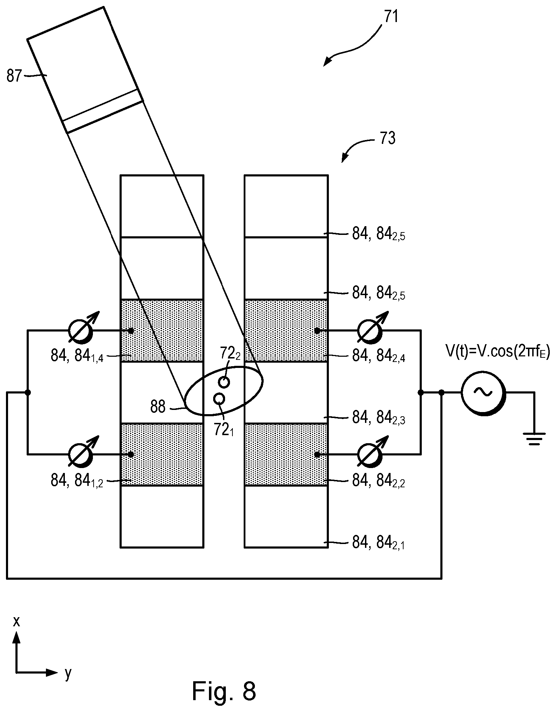

Referring also to Figure 8, operation of the system 31 is described in more detail

First and second ions $72_1$, $72_2$ are trapped close to each other in the microfabricated ion trap 73. The ions $72_1$, $72_2$ are illuminated with a laser beam 88, which serves as a gradient source.

Oscillating electric fields are injected onto opposing pairs of trap electrodes $84_{1,2}$, $84_{1,4}$, $84_{2,2}$, $84_{2,4}$. By controlling the phases and amplitudes of the voltages injected to the different electrodes, the electric field at the first ion $72_1$ can be nulled, while generating the desired field at the second ion $72_2$. This allows a single-qubit rotation to be applied to the right ion, while leaving the left ion unaffected.

## Control using frequency, phase and amplitude

The methods described herein allow for local, yet parallelisable control in two ways. First, an extent or area of a quantum gate can be locally adjusted by setting amplitude $e_i$ and/or time $t_i$. Secondly, a phase of the quantum gate can be locally adjusted by setting phase $k_i$.

The frequency $f_i$ of transition for an $i^{th}$ qubit is known (for example, determined by simulation) or can be measured. The frequency $f_G$ of oscillation of the gradient field and the frequency $f_{Ei}$ of oscillation for local oscillating field and be adjusted for a desired operation with desired speed.

Calculations and experimental data indicate that, with other parameters fixed, the single-qubit coupling rate is proportional to $1/(f_{Mi}^2 - f_{Ei}^2)$, where $f_{Mi}$ is motional frequency of ion i. Thus, setting $f_{Ei}$ close to $f_{Mi}$ increases efficiency of coupling, thus, increases speed of operation.

The methods allow implementation of both "spin-flip" and "phase-flip" quantum operations. The choice of operation depends on the choice of frequency $f_G$ of oscillation of gradient field and the frequency $f_{Ei}$ of oscillation of the electric field. For example, "spin-flip" operations can be executed by setting $f_{Ei} = f_i \pm f_G$ (examples of values are $f_i = 300$ MHz, $f_G = 6$ MHz, $f_{Ei} = 306$ MHz) and "phase-flip" quantum operations can be executed by settings $f_{Ei} = f_G$.

<u>Resonances</u>

Operations can be performed using a combination of potential gradient and an oscillating electric field, or a combination of a potential gradient, a carrier drive and an oscillating electric field. A carrier drive can be generated by (a) an electric field generated by one or more laser beams, or (b) a magnetic field. A potential gradient can be generated by (a) by one or more laser beams, or (b) a magnetic field gradient using one or more sources.

First and second methods of performing operations may be performed using a combination of potential gradient and an oscillating electric field. Third and fourth methods of performing operations use a combination of a potential gradient, a carrier drive and an oscillating electric field, and are described herein after.

*First method - Spin-flips*

A qubit has a transition frequency $f_i$. For an oscillating potential gradient at frequency $f_G$ and an oscillating electric field at frequency $f_{Ei}$, a "spin-flip" operation can be generated using the resonance:

$$\mathbf{f_G = f_i \pm f_{Ei}} \tag{1}$$

The spin flip rate $\Omega_{\text{spin-flip}}$ is given by:

$$\Omega_{\text{spin-flip}} = \frac{\Omega_{sb}\Omega_e\omega_r}{\left(\omega_r^2 - \omega_e^2\right)}, \tag{2}$$

where $\Omega_{sb}$ is the sideband Rabi frequency (which quantifies the effective potential gradient strength), $\omega_r$ is the oscillation mode (angular) frequency, $\omega_e$ is the electric-field (angular) frequency, and $\Omega_e$ is given by:

$$\Omega_e = \frac{qEr_0}{\hbar}, \tag{3}$$

where q is the charge of the ion, E is the electric field component along the oscillation mode, $\hbar$ is the reduced plank constant, and $r_o$ is the ion wavepacket size, which can be calculated as:

$$r_0 = \sqrt{\frac{\hbar}{2m\omega_r}}. \tag{4}$$

where m is the mass of the ion. As an example, for $Ca_{40}^+$ ions, with $\Omega_{sb} = 2\pi \times 1$ kHz, $\omega_r = 2\pi \times 6$ MHz, and oscillating E-field of angular frequency $\omega_e = 2\pi \times 5$ MHz with magnitude $E = 10$ V/m, $\Omega_{\text{spin-flip}}$ is calculated to be $2\pi \times 35$ kHz.

*Second method - Phase-flips*

A qubit has a transition frequency $f_i$. For an oscillating potential gradient at frequency $f_G$ and an oscillating electric field at frequency $f_{Ei}$, a "phase-flip" operation can be generated using the resonance:

$$\mathbf{f_G = f_{Ei}} \tag{5}$$

*Third and fourth methods - Spin-flips*

Sometimes, spin-flips are desired, but the first method cannot be used since it relies on using high-frequency potential gradients.

In third and fourth methods, an additional oscillating field, for example in the form of an oscillating magnetic or electric field at frequency $f_{Bi}$ is applied in addition to the gradient an oscillating gradient at frequency $f_G$ and an oscillating electric field at frequency $f_{Ei}$.

The additional carrier drive can be applied in a number of different ways including (a) a magnetic field generated using the same current electrode used to generate the potential gradient, (b) a magnetic field generated using a different electrode, (c) a magnetic field generated using a remote source, such as a microwave horn, (d) a laser field applied from an external laser beam, or l) a laser field applied through a trap-integrated waveguide.

Thus, in the third method, a qubit has a transition frequency $f_i$, then for an oscillating gradient field at frequency $f_G$, an oscillating electric field at frequency $f_{Ei}$, and an oscillating magnetic or electric field at frequency $f_{Bi}$, a "spin-flip" can be generated using the resonance:

$$f_{Bi} - f_i = m \, (f_E - f_G) \qquad\qquad\qquad (6)$$

where m in an integer. Thus, there are many resonances, each usable for generating spin-flips.

The fourth method is an extension of the second method. Every phase-flip operation corresponds to a shift of the qubit frequency. Thus, once $f_G = f_{Ei}$, the qubit frequency is shifted from $f_i$ to $f_i + d_f$, where $d_f$ is a qubit frequency shift which depends on oscillating electric field frequency $f_{Ei}$, ion motional mode frequency $f_{Mi}$, oscillating voltage $V_i$, oscillating current $I_g$, phase difference $k_i$ between the oscillating voltage and current, and trap geometry, and can be measured by qubit spectroscopy.

Once the shift offset $d_f$ is calculated and/or measured, a carrier drive can be applied having $f_{Bi} = f_i \pm d_f$ to generate a spin-flip. Overall, the resonance condition is:

$$f_G = f_{Ei} \qquad\qquad\qquad (7\text{-}1)$$

$$f_{Bi} - f_i = d_f \qquad\qquad\qquad (7\text{-}2)$$

where $d_f$ is the qubit frequency shift caused by applying $f_G = f_{Ei}$.

Changing amplitude $e_i$, time $t_i$ and phase $k_i$

The following may help to understand the effect of adjusting the amplitude $e_i$, duration $t_i$ and phase $k_i$ of the locally-applied electric fields $14_1$, $14_2$, ...$14_N$ (Figure 2) in the first and second method hereinbefore described.

Reference is made to H. Häffner, C. Roos and R. Blatt "Quantum computing with trapped ions": https://arxiv.org/pdf/0809.4368.pdf (2008).

Operations can be considered in terms of single-qubit quantum gates corresponding to rotations on the Bloch sphere. Rotations about the z axis are phase flips and rotations about the other axes (*i.e.,* x- or y-axes) are spin flips.

Spin-flip rotations can be expressed in terms of rotation operator $R(\theta,\phi)$ (see equation 10 in H. Häffner, C. Roos and R. Blatt *ibid.*). $\theta$ controls the rotation angle and can be considered to be the gate area, while $\phi$ adjusts the rotation axis and can be considered to be the gate phase. Phase-flip rotations can be written as a rotation operator $R_z(\theta)$. In the first method, the implemented rotation is $R(\theta,\phi)$. The amplitude $e_i$ and duration $t_i$ of the respective applied electric fields $14_1$, $14_2$, ...,$14_N$ can be changed to adjust $\theta$, while phase $k_i$ of the respective applied electric fields $14_1$, $14_2$, ...,$14_N$ can be changed to adjust $\phi$. In the second method, the implemented rotation is $Rz(\theta)$. Changing amplitude $e_i$, duration $t_i$ and phase $k_i$ adjusts $\theta$.

Additional comments

The methods hereinbefore described are most efficient when the electric field oscillating frequency $f_{Ei}$ is near-resonant with a motional frequency $f_{Mi}$ of the ion(s) to which the field is applied. Operation is possible for any the electric field oscillating frequency $f_{Ei}$, but operation speed scales as either $1/(f_{Mi} - f_{Ei})$ or $1/(f_{Mi}^2 - f_{Ei}^2)$ depending on the method (resonance) in question.

The methods hereinbefore describe can have another advantage over those that involve ion transport in that the voltages $V_i$ can be made very low by tuning $f_{Ei}$ near $f_{Mi}$.

**Claims**

1. A method of operating a charged particle trap (3) which includes a set of trap electrodes (12), the method comprising:

   · trapping a first charged particle ($1_1$) at a first position ($4_1$), the first charged particle providing a first qubit ($2_1$)

having a first transition frequency ($f_1$);

· trapping a second charged particle ($1_2$) at a second position ($4_2$), the second charged particle having a second transition frequency ($f_2$);

· applying (S2) a potential gradient (11) to the first and second charged particles wherein the first and second charged particles experience first and second magnitudes ($g_1$, $g_2$) of potential gradient, respectively, and wherein the potential gradient oscillates at a given frequency ($f_G$) and is monochromatic;

while applying the potential gradient:

· applying (S3) a first oscillating potential to a first electrode ($12_1$) at a first frequency ($f_{E1}$) so as to apply a first oscillating electric field ($14_1$) locally to the first charged particle; and

· applying (S3) a second oscillating potential to a second electrode ($12_2$) at a second frequency ($f_{E2}$) so as to apply a second oscillating electric field ($14_2$) locally to the second charged particle.

2. The method of claim 1, further comprising:

· the first oscillating electric field ($14_1$) has a first phase value ($k_1$); and/or

· the second oscillating electric field ($14_2$) has a second, different phase value ($k_2$).

3. The method of claim 1 or 2, wherein applying (S2) the potential gradient (11) comprises:

· applying at least one magnetic field gradient (51) at the given frequency ($f_G$) to the first and second charged particles ($1_1$, $1_2$);

· applying a laser field at the given frequency to the first and second charged particles; and/or

· applying first and second laser fields to the first and second charged particles, wherein the first and second laser fields have first and second laser frequencies, respectively, and the difference between the first and second laser frequencies is equal to the given frequency.

4. The method of any one of claims 1 to 3, further comprising:

· applying a carrier drive to the first and second charged particles ($1_1$, $1_2$).

5. The method of claim 3 or 4, wherein applying (S2) the potential gradient (11) comprises:

· driving an oscillating current ($I(t)$) through an elongate conductive element (42) for generating the at least one magnetic field (50).

6. The method of claim 5, wherein the elongate conductive element (42) includes first and second sections, wherein the first and second sections of the elongate conductive element are non-collinear.

7. The method of claim 3 or 4, wherein the applying (S2) the at least one potential gradient (11) to the first and second charged particles ($1_1$, $1_2$) comprises:

· driving a first oscillating current ($I(t)$) through a first elongate conductive element (42); and

· driving a second oscillating current through a second elongate conductive element spaced apart from the first elongate conductive element.

8. The method of any one of claims 1 to 7, wherein the charged particle trap (3) includes a substrate (80) having a principal surface (81), wherein at least a first set of the set of trap electrodes (84) are disposed on the principal surface of the substrate

9. The method of claim 8, wherein a second set of the set of trap electrodes are supported on a different surface and are non-coplanar with the first set (84).

10. The method of claim 8 or 9, wherein the charged particle trap (3) includes at least one elongate conductive element (42) for generating the at least one magnetic field (50).

11. The method of claim 10, wherein the set of trap electrodes (44) includes first and second arrays of trap electrodes and the at least one elongate conductive element (42) is interposed between the first and second arrays of trap electrodes.

12. The method of claim 10, wherein the at least one elongate conductive element (42) is supported on a different surface and is non-coplanar with the first set of trap electrodes (44).

13. The method of any one of claims 1 to 12, wherein applying (S2) the potential gradient (11) to the first and second charged particles ($1_1$, $1_2$) comprises:

· illuminating the first and second charged particles with at least one laser beam (88).

14. The method of any one of claims 1 to 13, wherein the first charged particle ($1_1$) has a given mode of oscillation having a given direction of oscillation, the method comprising:

· applying (S2) the potential gradient (11) such that the potential gradient ($g_1$) at the first charged particle has a component (E) which is not perpendicular to the given direction of oscillation and the potential gradient ($g_2$) at the second charged particle ($1_2$) has a component which is not perpendicular to the given direction of oscillation;
· applying (S3) the first oscillating electric field ($14_1$) such that that first oscillating electric field is not perpendicular to the given direction of oscillation; and
·applying (S3) the second oscillating electric field ($14_2$) such that that second oscillating electric field is not perpendicular to the given direction of oscillation.

15. The method of any one of claims 1 to 14, wherein the set of trap electrodes (12) includes the first and second electrodes ($12_1$, $12_2$).

16. A system (8) comprising:

a charged particle trap (3) which includes a set of trap electrodes (12); and
a control system (34) for controlling the charged particle trap;
the control system configured:

· to trap a first charged particle ($1_1$) at a first position ($4_1$), the first charged particle providing a first qubit ($2_1$) having a first transition frequency ($f_1$);
· to trap a second charged particle ($1_2$) at a second position ($4_2$), the second charged particle having a second transition frequency ($f_2$);
· to apply (S2) a potential gradient (11) to the first and second charged particles, wherein the first and second charged particles experience first and second magnitudes ($g_1$, $g_2$) of potential gradient, respectively, and wherein the potential gradient oscillates at a given frequency ($f_G$) and is monochromatic;

while applying the potential gradient:

· to apply (S3) a first oscillating potential to a first electrode ($12_1$) at a first frequency ($f_{E1}$) so as to apply a first oscillating electric field ($14_1$) locally to the first charged particle; and
· to apply a second oscillating potential to a second electrode ($12_2$) at a second frequency ($f_{E2}$) so as to apply a second oscillating electric field ($14_2$) locally to the second charged particle.

**Patentansprüche**

1. Verfahren zum Betreiben einer Falle (3) für geladene Teilchen, die einen Satz von Fallenelektroden (12) einschließt, das Verfahren umfassend:

• Einfangen eines ersten geladenen Teilchens ($1_1$) an einer ersten Position ($4_1$), wobei das erste geladene Teilchen ein erstes Qubit ($2_1$) mit einer ersten Übergangsfrequenz ($f_1$) bereitstellt;
• Einfangen eines zweiten geladenen Teilchens ($1_2$) an einer zweiten Position ($4_2$), wobei das zweite geladene Teilchen eine zweite Übergangsfrequenz ($f_2$) aufweist;
• Anwenden (S2) eines Potentialgradienten (11) an die ersten und zweiten geladenen Teilchen, wobei die ersten und zweiten geladenen Teilchen jeweils erste und zweite Größen ($g_1$, $g_2$) eines Potentialgradienten erfahren, und wobei der Potentialgradient mit einer gegebenen Frequenz ($f_G$) oszilliert und monochromatisch ist;

beim Anwenden des Potentialgradienten:

• Anwenden (S3) eines ersten oszillierenden Potentials auf eine erste Elektrode ($12_1$) mit einer ersten Frequenz ($f_{E1}$), um so ein erstes oszillierendes elektrisches Feld ($14_1$) lokal auf das erste geladene Teilchen anzuwenden; und
• Anwenden (S3) eines zweiten oszillierenden Potentials auf eine zweite Elektrode ($12_2$) mit einer zweiten Frequenz ($f_{E2}$), um so ein zweites oszillierendes elektrisches Feld ($14_2$) lokal auf das zweite geladene Teilchen anzuwenden.

2. Verfahren nach Anspruch 1, ferner umfassend:

• das erste oszillierende elektrische Feld ($14_1$) einen ersten Phasenwert ($k_1$) aufweist; und/oder
• das zweite oszillierende elektrische Feld ($14_2$) einen zweiten, anderen Phasenwert ($k_2$) aufweist.

3. Verfahren nach Anspruch 1 oder Anspruch 2, wobei das Anwenden (S2) des Potentialgradienten (11) Folgendes umfasst:

• Anwenden zumindest eines Magnetfeldgradienten (51) mit der gegebenen Frequenz ($f_G$) auf die ersten und zweiten geladenen Teilchen ($1_1$, $1_2$);
• Anwenden eines Laserfelds mit der gegebenen Frequenz auf die ersten und zweiten geladenen Teilchen; und/oder
• Anwenden eines ersten und eines zweiten Laserfelds auf die ersten und zweiten geladenen Teilchen, wobei das erste und das zweite Laserfeld jeweils eine erste und eine zweite Laserfrequenz aufweisen und die Differenz zwischen der ersten und der zweiten Laserfrequenz gleich der gegebenen Frequenz ist.

4. Verfahren nach einem der Ansprüche 1 bis 3, ferner umfassend:

• Anwenden eines Trägerantriebs auf die ersten und zweiten geladenen Teilchen ($1_1$, $1_2$).

5. Verfahren nach Anspruch 3 oder Anspruch 4, wobei das Anwenden (S2) des Potentialgradienten (11) Folgendes umfasst:

• Lenken eines oszillierenden Stroms (I(t)) durch ein längliches leitfähiges Element (42) zum Erzeugen des zumindest einen Magnetfelds (50).

6. Verfahren nach Anspruch 5, wobei das längliche leitfähige Element (42) einen ersten und einen zweiten Abschnitt einschließt, wobei der erste und der zweite Abschnitt des länglichen leitfähigen Elements nicht kollinear sind.

7. Verfahren nach Anspruch 3 oder Anspruch 4, wobei das Anwenden (S2) des zumindest einen Potentialgradienten (11) auf die ersten und zweiten geladenen Teilchen ($1_1$, $1_2$) Folgendes umfasst:

• Lenken eines ersten oszillierenden Stroms (I(t)) durch ein erstes längliches leitfähiges Element (42); und
• Lenken eines zweiten oszillierenden Stroms durch ein zweites längliches leitfähiges Element, das von dem ersten länglichen leitfähigen Element beabstandet ist.

8. Verfahren nach einem der Ansprüche 1 bis 7, wobei die Falle (3) für geladene Teilchen ein Substrat (80) mit einer Hauptoberfläche (81) einschließt, wobei zumindest ein erster Satz des Satzes von Fallenelektroden (84) auf der Hauptoberfläche des Substrats angeordnet ist.

9. Verfahren nach Anspruch 8, wobei ein zweiter Satz des Satzes von Fallenelektroden auf einer anderen Oberfläche gestützt wird und mit dem ersten Satz (84) nicht koplanar ist.

10. Verfahren nach Anspruch 8 oder 9, wobei die Falle (3) für geladene Teilchen zumindest ein längliches leitfähiges Element (42) zum Erzeugen des zumindest einen Magnetfelds (50) einschließt.

11. Verfahren nach Anspruch 10, wobei der Satz von Fallenelektroden (44) eine erste und eine zweite Anordnung von Fallenelektroden einschließt und das zumindest eine längliche leitfähige Element (42) zwischen der ersten und der zweiten Anordnung von Fallenelektroden eingefügt ist.

**12.** Verfahren nach Anspruch 10, wobei das zumindest eine längliche leitfähige Element (42) auf einer anderen Oberfläche gestützt wird und mit dem ersten Satz von Fallenelektroden (44) nicht koplanar ist.

**13.** Verfahren nach einem der Ansprüche 1 bis 12, wobei das Anwenden (S2) des Potentialgradienten (11) auf die ersten und zweiten geladenen Teilchen ($1_1$, $1_2$) Folgendes umfasst:

• Beleuchten der ersten und zweiten geladenen Teilchen mit zumindest einem Laserstrahl (88).

**14.** Verfahren nach einem der Ansprüche 1 bis 13, wobei das erste geladene Teilchen ($1_1$) einen gegebenen Oszillationsmodus mit einer gegebenen Oszillationsrichtung aufweist, das Verfahren umfassend:

• Anwenden (S2) des Potentialgradienten (11), sodass der Potentialgradient ($g_1$) am ersten geladenen Teilchen eine Komponente (E) aufweist, welche nicht senkrecht zur gegebenen Oszillationsrichtung ist, und der Potentialgradient ($g_2$) am zweiten geladenen Teilchen ($1_2$) eine Komponente aufweist, welche nicht senkrecht zur gegebenen Oszillationsrichtung ist;
• Anwenden (S3) des ersten oszillierenden elektrischen Feldes ($14_1$), sodass das erste oszillierende elektrische Feld nicht senkrecht zu der gegebenen Oszillationsrichtung ist; und
• Anwenden (S3) des zweiten oszillierenden elektrischen Feldes ($14_2$), sodass das zweite oszillierende elektrische Feld nicht senkrecht zur gegebenen Oszillationsrichtung ist.

**15.** Verfahren nach einem der Ansprüche 1 bis 14, wobei der Satz von Fallenelektroden (12) die erste und die zweite Elektrode ($12_1$, $12_2$) einschließt.

**16.** System (8), umfassend:

eine Falle (3) für geladene Teilchen, welche einen Satz von Fallenelektroden (12) einschließt; und ein Steuersystem (34) zum Steuern der Falle für geladene Teilchen;
ein Steuersystem, das zu Folgendem konfiguriert ist:

• Einfangen eines ersten geladenen Teilchens ($1_1$) an einer ersten Position ($4_1$), wobei das erste geladene Teilchen ein erstes Qubit ($2_1$) mit einer ersten Übergangsfrequenz ($f_1$) bereitstellt;
• Einfangen eines zweiten geladenen Teilchens ($1_2$) an einer zweiten Position ($4_2$), wobei das zweite geladene Teilchen eine zweite Übergangsfrequenz ($f_2$) aufweist;
• Anwenden (S2) eines Potentialgradienten (11) auf die ersten und zweiten geladenen Teilchen, wobei die ersten und zweiten geladenen Teilchen jeweils erste und zweite Größen ($g_1$, $g_2$) eines Potentialgradienten erfahren, und wobei der Potentialgradient mit einer gegebenen Frequenz ($f_G$) oszilliert und monochromatisch ist;

beim Anwenden des Potentialgradienten:

• Anwenden (S3) eines ersten oszillierenden Potentials auf eine erste Elektrode ($12_1$) mit einer ersten Frequenz ($f_{E1}$), um so ein erstes oszillierendes elektrisches Feld ($14_1$) lokal auf das erste geladene Teilchen anzuwenden; und
• Anwenden eines zweiten oszillierenden Potentials auf eine zweite Elektrode ($12_2$) mit einer zweiten Frequenz ($f_{E2}$), um so ein zweites oszillierendes elektrisches Feld ($14_2$) lokal auf das zweite geladene Teilchen anzuwenden.

**Revendications**

**1.** Procédé de fonctionnement d'un piège à particules chargées (3) qui comprend un ensemble d'électrodes de piège (12), le procédé comprenant :

• le piégeage d'une première particule chargée ($1_1$) au niveau d'une première position ($4_1$), la première particule chargée fournissant un premier qubit ($2_1$) possédant une première fréquence de transition (fi) ;
• le piégeage d'une seconde particule chargée ($1_2$) au niveau d'une seconde position ($4_2$), la seconde particule chargée possédant une seconde fréquence de transition ($f_2$) ;
• l'application (S2) d'un gradient de potentiel (11) aux première et seconde particules chargées, les première et seconde particules chargées subissant respectivement des première et seconde amplitudes ($g_1$, $g_2$) de gradient de potentiel, et ledit gradient de potentiel oscillant à une fréquence donnée ($f_G$) et étant monochromatique ;

tout en appliquant le gradient de potentiel :

• l'application (S3) d'un premier potentiel oscillant à une première électrode ($12_1$) à une première fréquence ($f_{E1}$) de façon à appliquer localement un premier champ électrique oscillant ($14_1$) à la première particule chargée ; et
• l'application (S3) d'un second potentiel oscillant à une seconde électrode ($12_2$) à une seconde fréquence ($f_{E2}$) de façon à appliquer localement un second champ électrique oscillant ($14_2$) à la seconde particule chargée.

2. Procédé de la revendication 1, comprenant en outre :

• le premier champ électrique oscillant ($14_1$) possédant une première valeur de phase ($k_1$) ; et/ou
• le second champ électrique oscillant ($14_2$) possédant une seconde valeur de phase différente ($k_2$).

3. Procédé de la revendication 1 ou 2, ladite application (S2) du gradient de potentiel (11) comprenant :

• l'application d'au moins un gradient de champ magnétique (51) à la fréquence donnée ($f_G$) aux première et seconde particules chargées ($1_1$, $1_2$) ;
• l'application d'un champ laser à la fréquence donnée aux première et seconde particules chargées ; et/ou
• l'application des premier et second champs laser aux première et seconde particules chargées, les premier et second champs laser possédant respectivement des première et seconde fréquences laser, et la différence entre les première et seconde fréquences laser étant égale à la fréquence donnée.

4. Procédé de l'une quelconque des revendications 1 à 3, comprenant en outre :

• l'application d'un entraînement de porteur aux première et seconde particules chargées ($1_1$, $1_2$).

5. Procédé de la revendication 3 ou 4, ladite application (S2) du gradient de potentiel (11) comprenant :

• l'entraînement d'un courant oscillant (I(t)) à travers un élément conducteur allongé (42) pour générer ledit au moins un champ magnétique (50).

6. Procédé de la revendication 5, ledit élément conducteur allongé (42) comprenant des première et seconde sections, lesdites première et seconde sections de l'élément conducteur allongé étant non colinéaires.

7. Procédé de la revendication 3 ou 4, ladite application (S2) dudit au moins un gradient de potentiel (11) aux première et seconde particules chargées ($1_1$, $1_2$) comprenant :

• l'entraînement d'un premier courant oscillant (I(t)) à travers un premier élément conducteur allongé (42) ; et
• l'entraînement d'un second courant oscillant à travers un second élément conducteur allongé espacé du premier élément conducteur allongé.

8. Procédé de l'une quelconque des revendications 1 à 7, ledit piège à particules chargées (3) comprenant un substrat (80) possédant une surface principale (81), au moins un premier ensemble de l'ensemble d'électrodes de piège (84) étant disposé sur la surface principale du substrat.

9. Procédé de la revendication 8, un second ensemble de l'ensemble d'électrodes de piégeage étant supporté sur une surface différente et n'étant pas coplanaire avec le premier ensemble (84).

10. Procédé de la revendication 8 ou 9, ledit piège à particules chargées (3) comprenant au moins un élément conducteur allongé (42) destiné à générer l'au moins un champ magnétique (50).

11. Procédé de la revendication 10, ledit ensemble d'électrodes de piégeage (44) comprenant des premier et second réseaux d'électrodes de piégeage et ledit au moins un élément conducteur allongé (42) étant interposé entre les premier et second réseaux d'électrodes de piégeage.

12. Procédé de la revendication 10, ledit au moins un élément conducteur allongé (42) étant supporté sur une surface différente et n'étant pas coplanaire avec le premier ensemble d'électrodes de piégeage (44).

13. Procédé de l'une quelconque des revendications 1 à 12, ladite application (S2) du gradient de potentiel (11) aux première et seconde particules chargées ($1_1$, $1_2$) comprenant :

   • l'éclairage des première et seconde particules chargées avec au moins un faisceau laser (88).

14. Procédé de l'une quelconque des revendications 1 à 13, ladite première particule chargée ($1_1$) possédant un mode d'oscillation donné présentant une direction d'oscillation donnée, le procédé comprenant :

   • l'application (S2) du gradient de potentiel (11) de sorte que le gradient de potentiel ($g_1$) au niveau de la première particule chargée possède une composante (E) qui n'est pas perpendiculaire à la direction d'oscillation donnée et le gradient de potentiel ($g_2$) au niveau de la seconde particule chargée ($1_2$) possède une composante qui n'est pas perpendiculaire à la direction d'oscillation donnée ;
   • l'application (S3) du premier champ électrique oscillant ($14_1$) de sorte que ce premier champ électrique oscillant ne soit pas perpendiculaire à la direction d'oscillation donnée ; et
   • l'application (S3) du second champ électrique oscillant ($14_2$) de sorte que ce second champ électrique oscillant ne soit pas perpendiculaire à la direction d'oscillation donnée.

15. Procédé de l'une quelconque des revendications 1 à 14, ledit ensemble d'électrodes de piégeage (12) comprenant les première et seconde électrodes ($12_1$, $12_2$).

16. Système (8) comprenant :

   un piège à particules chargées (3) qui comprend un ensemble d'électrodes de piège (12) ; et
   un système de commande (34) destiné à commander le piège à particules chargées ;
   le système de commande étant configuré pour :

   • piéger une première particule chargée ($1_1$) au niveau d'une première position ($4_1$), la première particule chargée fournissant un premier qubit ($2_1$) possédant une première fréquence de transition ($f_1$) ;
   • piéger une seconde particule chargée ($1_2$) au niveau d'une seconde position ($4_2$), la seconde particule chargée possédant une seconde fréquence de transition ($f_2$) ;
   • appliquer (S2) un gradient de potentiel (11) aux première et seconde particules chargées, les première et seconde particules chargées subissant respectivement des première et seconde amplitudes ($g_1$, $g_2$) de gradient de potentiel, et ledit gradient de potentiel oscillant à une fréquence donnée ($f_G$) et étant monochromatique ;

   tout en appliquant le gradient de potentiel :

   • appliquer (S3) un premier potentiel oscillant à une première électrode ($12_1$) à une première fréquence ($f_{E1}$) de façon à appliquer localement un premier champ électrique oscillant ($14_1$) à la première particule chargée ; et
   • appliquer un second potentiel oscillant à une seconde électrode ($12_2$) à une seconde fréquence ($f_{E2}$) de façon à appliquer localement un second champ électrique oscillant ($14_2$) à la seconde particule chargée.

Fig. 1

Fig. 2

Trap charged particles   S1

Apply global oscillating potential gradient   S2

Apply local oscillating electric fields   S3

Fig. 3

Fig. 4

$V(t)=V_2.\cos(2\pi f_{E2} +k_2)$

44, 44$_{1,6}$

33

$E_2(t)$

Magnetic field gradient $g_2$

$V_B$

51

32$_2$

53$_{1,6}$

$I(t)$

42

$V(t)=V_1.\cos(2\pi f_{E1} +k_1)$

51

$E_1(t)$

Magnetic field gradient g1

$V_A$

32$_1$

44, 44$_{1,1}$

53$_{1,1}$

x

y

$I(t)=I_G.\cos(2\pi f_G)$

46

31

Fig. 5

61

64

62    63

DAC

57    58

60

56

44

59

Fig. 6

Fig. 7

71

73

84, 84$_{2,5}$

84, 84$_{2,5}$

87

84, 84$_{1,4}$

72$_2$

84, 84$_{2,4}$

$V(t)=V.\cos(2\pi f_E)$

88

84, 84$_{2,3}$

72$_1$

84, 84$_{1,2}$

84, 84$_{2,2}$

84, 84$_{2,1}$

x

y

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021205145 A1

**Non-patent literature cited in the description**

- **R. T. SUTHERLAND ; R. SRINIVAS ; D. T. C. ALLCOCK**. *Individual addressing of trapped ion qubits with geometric phase gates*, 14 June 2022, https://arxiv. org/pdf/2206. 06546

- **SRINIVAS RAGHU**. *Laser-free trapped-ion quantum logic with a radiofrequency magnetic field gradient*, 01 January 2020, 1-266, https://www.nist.gov/system/files/documents/2022/04/14/ RaghuSrinivas_2020.pdf